# EUROPEAN PATENT APPLICATION

(11) **EP 4 447 208 A1**
(43) Date of publication of application: **16.10.2024**
(21) Application number: 23745858.3
(22) Date of filing: 06.01.2023
(51) Int. Cl.: H01M 50/20

(54) **ENCLOSURE FRAME, BATTERY, ELECTRIC APPARATUS, AND METHOD AND APPARATUS FOR MANUFACTURING ENCLOSURE FRAME**

(30) Priority: 26.01.2022 CN 202210096682
(71) Applicant: Contemporary Amperex Technology (Hong Kong) Limited, Central, Central And Western District (HK)
(72) Inventor: SHANG, Zhaoyu, Ningde, Fujian 352100 (CN); NIE, Ruilian, Ningde, Fujian 352100 (CN); LV, Pengfei, Ningde, Fujian 352100 (CN); ZHONG, Guangyue, Ningde, Fujian 352100 (CN)
(74) Representative: Holt, Lucy Rose
(86) International application number: PCT/CN2023/071033
(87) International publication number: WO 2023/142973

(57) **Abstract**

The present application relates to the technical field of batteries. Disclosed in the present application are an enclosure frame, a battery, an electric apparatus, and a method and an apparatus for manufacturing an enclosure frame. The enclosure frame is applied to the battery, and comprises: a pair of side plates, the pair of side plates being arranged opposite each other in a first direction; and a pair of end plates, the pair of end plates being arranged opposite each other in a second direction perpendicular to the first direction, and the end plates being arranged between the pair of side plates. The two ends of each end plate in the first direction are respectively provided with a first groove, and the side of each side plate facing the corresponding end plate is provided with a first protrusion; or, the two ends of each end plate in the first direction are respectively provided with a first protrusion, and the side of each side plate facing the corresponding end plate is provided with a first groove; and the first protrusion is configured to be embedded into the first groove, so as to restrict the movement, in the second direction, of the end plate relative to the side plate. The enclosure frame has high assembly quality and high production efficiency.

## Description

### CROSS-REFERENCE TO RELATED APPLICATIONS

This application claims priority to Chinese Patent Application No. CN202210096682.5, filed on January 26, 2022 and entitled "ENCLOSURE FRAME, BATTERY, ELECTRIC DEVICE, AND METHOD AND DEVICE FOR MANUFACTURING ENCLOSURE FRAME", which is incorporated herein by reference in its entirety.

### TECHNICAL FIELD

This application relates to the field of battery technologies and specifically to an enclosure frame, a battery, an electric device, and a method and device for manufacturing an enclosure frame.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development. A battery typically includes an enclosure frame and a battery cell disposed in the enclosure frame, where the enclosure frame may include a side plate and an end plate, and the side plate and the end plate form a space for accommodating the battery cell.

During manufacturing of the battery, to ensure the strength of the enclosure frame, the side plate is typically fixedly connected to the end plate through welding. However, when the side plate is welded to the end plate, problems such as blowouts, false welds, and collapse are likely to occur, thus affecting the weld seam strength and leading to insufficient strength of the enclosure frame. This in turn affects the assembly yield and leads to low production efficiency. Therefore, how the production efficiency of an enclosure frame is improved is an urgent technical problem that needs to be solved in battery technology.

### SUMMARY

This application is intended to provide an enclosure frame, a battery, an electric device, and a method and device for manufacturing an enclosure frame. The enclosure frame has high assembly quality and high production efficiency.

This application is implemented using the following technical solutions.

According to a first aspect, this application provides an enclosure frame applied to a battery. The enclosure frame includes: a pair of side plates, where the pair of side plates are disposed opposite each other in a first direction; and a pair of end plates, where the pair of end plates are disposed opposite each other in a second direction perpendicular to the first direction, and the end plates are disposed between the pair of side plates; where two ends of the end plate in the first direction are each provided with a first groove, and a side of the side plate facing the end plate is provided with a first protrusion; or two ends of the end plate in the first direction are each provided with a first protrusion, and a side of the side plate facing the end plate is provided with a first groove; and the first protrusion is configured to be embedded into the first groove so as to limit movement of the end plate along the second direction relative to the side plate.

In the enclosure frame according to an embodiment of this application, that is applied to the battery, the end plate and side plate are connected by embedding and press-fitting the first protrusion into the first groove, replacing a welding connection manner. This avoids weak strength of the enclosure frame due to false welds, ensuring the connection strength between the end plate and the side plate, and allowing the entire enclosure frame to have high strength, high assembly quality, and high production efficiency.

According to some embodiments of this application, the first protrusion and the first groove both extend along a third direction, and the third direction is perpendicular to the first direction and the second direction.

In the above solution, the first protrusion and the first groove extending along the third direction ensures the connection stability between the end plate and the side plate, which is conducive to limiting movement of the end plate along the second direction relative to the side plate.

According to some embodiments of this application, along a direction from the bottom of the first groove to an opening of the first groove, width of the first groove gradually increases.

In the above solution, in other words, the opening of the first groove is large, so that the width of the first groove gradually decreases as depth of the first groove increases, which helps the first protrusion to be embedded into the first groove and facilitates press-fitting between the side plate and the end plate, ensuring good contact between the side plate and the end plate, and ensuring the connection stability between the end plate and the side plate.

According to some embodiments of this application, a sealing adhesive is filled between the first protrusion and the first groove.

In the above solution, the sealing adhesive is filled between the first protrusion and the first groove, so that the end plate and the side plate are hermetically connected to each other, preventing liquid or other impurities from entering the enclosure frame and ensuring the sealing effect of the enclosure frame.

According to some embodiments of this application, the bottom of the first groove is provided with an adhesive overflowing groove.

In the above solution, the adhesive overflowing groove is located at the bottom of the first groove, which helps to guide the sealing adhesive to flow when the first protrusion is embedded into the first groove, allowing the first groove to be filled with the sealing adhesive, and ensuring sealing fit between the first protrusion and the first groove.

According to some embodiments of this application, a cross section of the adhesive overflowing groove is rectangular.

In the above solution, the rectangular adhesive overflowing groove facilitates processing and is conducive to addressing a punching position for the end plate in advance when the side plate and the end plate are automatically punched, helping to implement punching positioning of the side plate and the end plate.

According to some embodiments of this application, along the second direction, two ends of the side plate extend beyond the pair of end plates respectively.

In the above solution, the ends of the side plate extend beyond the end plate to reserve a bending length of the side plate, ensuring that there is a large connection area between the side plate and the end plate when the side plate and the end plate are press-fitted together, thereby ensuring the connection stability between the side plate and the end plate.

According to some embodiments of this application, along the second direction, the side plate extends beyond the end plate by a length of 10 mm to 20 mm.

In the above solution, the length by which the side plate extends beyond the end plate is 10 mm to 20 mm, ensuring the connection stability between the side plate and the end plate and ensuring a large space formed by the enclosure frame. An excessively large length by which the side plate extends beyond the end plate leads to waste of a mounting space, while an excessively small length by which the side plate extends beyond the end plate leads to weak connection stability between the side plate and the end plate and even leads to detachment of the side plate from the end plate.

According to some embodiments of this application, the enclosure frame further includes a bottom plate, where the pair of side plates extend from two edges of the bottom plate in the first direction along a direction perpendicular to the bottom plate, and the pair of end plates are located in a space formed by the bottom plate and the pair of side plates.

In the above solution, the bottom plate, the end plate, and the side plate form a space for accommodating a battery cell, facilitating the accommodation of the battery cell.

According to some embodiments of this application, the bottom plate and the pair of side plates are integrally formed.

In the above solution, the bottom plate and the pair of side plates being integrally formed facilitates processing and reduces the manufacturing costs.

According to some embodiments of this application, the enclosure frame further includes a partition plate, where the partition plate is disposed between the pair of end plates, and two ends of the partition plate in the first direction are connected to the pair of side plates respectively.

In the above solution, when the enclosure frame is provided with the partition plate, the partition plate is connected to the side plate, facilitating partition of the space formed by the enclosure frame and management of the battery cell disposed in the enclosure frame.

According to some embodiments of this application, the two ends of the partition plate in the first direction are each provided with a second groove, and a side of the side plate facing the partition plate is provided with a second protrusion; or the two ends of the partition plate in the first direction are each provided with a second protrusion, and a side of the side plate facing the partition plate is provided with a second groove. The second protrusion is configured to be embedded into the second groove so as to limit movement of the partition plate along the second direction relative to the side plate.

In the above solution, the partition plate and the side plate are connected by embedding the second protrusion into the second groove, ensuring the connection strength between the partition plate and the side plate.

According to a second aspect, this application provides a battery including the enclosure frame according to any one of the foregoing solutions and a plurality of battery cells, where the battery cells are stacked in the enclosure frame.

According to a third aspect, this application provides an electric device including the battery according to any one of the foregoing solutions.

According to a fourth aspect, this application provides a method for manufacturing an enclosure frame. The method includes: providing a pair of side plates, where the pair of side plates are disposed opposite each other; providing an end plate, where two opposite ends of the end plate are each provided with a first groove or a first protrusion; placing the end plate between the pair of side plates such that the first groove or the first protrusion faces the side plate; and punching the side plate by taking the end plate as a bottom die such that the side plate deforms and is connected to the end plate.

In the method for manufacturing an enclosure frame according to an embodiment of this application, the bottom die does not need to be additionally provided. The end plate is used as the bottom die, and the side plate is punched so that the side plate is bent to deform and pressed together with the end plate, that is, the first protrusion is embedded into the first groove so as to limit the movement of the end plate along the second direction relative to the side plate. This ensures the connection strength between the end plate and the side plate and allows an enclosure frame manufactured to have high strength, long service life, high assembly quality, and high production efficiency.

According to some embodiments of this application, before placing the end plate between the pair of side plates, the method for manufacturing an enclosure frame further includes: applying a sealing adhesive to the first groove or the first protrusion.

In the above solution, applying the sealing adhesive to the first groove or the first protrusion allows a joint of the end plate and the side plate to be sealed after the first protrusion fits with the first groove, ensuring the sealing effect of the enclosure frame.

According to a fifth aspect, this application provides an apparatus for manufacturing an enclosure frame. The apparatus includes: a provision module, configured to provide a pair of side plates and an end plate, where the pair of side plates are disposed opposite each other, and two opposite ends of the end plate are each provided with a first groove or a first protrusion; and a mounting module, configured to: place the end plate between the pair of side plates such that the first groove or the first protrusion faces the side plate, and punch the side plate by taking the end plate as a bottom die such that the side plate deforms and is connected to the end plate.

Additional aspects and advantages of this application will be given in part in the following description, part of which will become apparent from the following description or be learned from the practice of this application.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a schematic structural diagram of a battery according to some embodiments of this application;
FIG. 3 is a schematic structural exploded view of a battery according to some embodiments of this application;
FIG. 4 is a schematic structural diagram of an enclosure frame according to some embodiments of this application;
FIG. 5 is a locally enlarged view of position A in FIG. 4;
FIG. 6 is a schematic structural diagram of an enclosure frame according to some embodiments of this application;
FIG. 7 is an enlarged view of position B in FIG. 6;
FIG. 8 is a vertical view of an end plate according to some embodiments of this application;
FIG. 9 is a locally enlarged view of position C in FIG. 8;
FIG. 10 is a schematic structural exploded view of an enclosure frame according to some embodiments of this application;
FIG. 11 is a schematic structural diagram of an enclosure frame according to some other embodiments of this application;
FIG. 12 is a schematic flowchart of a method for manufacturing an enclosure frame according to some embodiments of this application; and according to some embodiments of this application,
FIG. 13 is a schematic block diagram of an apparatus for manufacturing an enclosure frame according to some embodiments of this application.

The accompanying drawings are not drawn to scale.

Reference signs: 100. battery; 101. box; 1011. first portion; 1012. second portion; 11. enclosure frame; 111. side plate; 112. end plate; 113. bottom plate; 114. partition plate; 121. first groove; 122. first protrusion; 123. adhesive overflowing groove; 20. battery cell; 200. controller; 300. motor; and 1000. vehicle.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. Apparently, the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by persons skilled in the art to which this application relates. The terms used in the specification of this application are intended to merely describe the specific embodiments rather than to limit this application. The terms "include", "have", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate three cases: presence of A; presence of both A and B; and presence of B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

The battery mentioned in this application is a single physical module that includes a plurality of battery cells for providing a higher voltage and capacity. For example, the battery mentioned in this application may include a battery module, a battery pack, or the like.

The battery includes an enclosure frame and a battery cell disposed in the enclosure frame. The enclosure frame typically includes a side plate and an end plate, where the side plate and the end plate are connected to form a space for accommodating the battery cell, which positions the battery cell. The enclosure frame is typically made of metal, has good strength, and is conducive to protecting the battery cell.

During production of the battery, the production efficiency of the battery is a non-negligible issue. For manufacturing of the battery, a main factor affecting the production efficiency is assembly quality, for example, assembly quality of the enclosure frame.

The inventors have found that in the prior art, to ensure certain strength of the enclosure frame, the side plate is typically fixedly connected to the end plate through welding. Before the side plate is welded to the end plate, a gap required for welding needs to be reserved at a joint of the side plate and the end plate, facilitating the welding of the side plate and the end plate. When the side plate is welded to the end plate, the defects of blowouts, false welds, collapse, and the like are likely to occur, thus affecting the weld seam strength and leading to insufficient strength of the enclosure frame. The reasons for the above defects are as follows: A positioning fixture for welding the side plate and the end plate is improperly assembled, leading to misalignment of the weld seam; an excessively large assembly gap is likely to cause collapse or false welds; and an excessively high welding power or a dirty welding surface is likely to cause blowouts, affecting the assembly quality of the enclosure frame, thus affecting the assembly yield and leading to low production efficiency.

In view of this, to solve the problem of low production efficiency caused by low assembly quality of the enclosure frame, the inventors have designed an enclosure frame through in-depth research. The enclosure frame includes a pair of side plates and a pair of end plates, where the pair of side plates are disposed opposite each other in a first direction, the pair of end plates are disposed opposite each other in a second direction perpendicular to the first direction, the end plates are disposed between the pair of side plates, and the end plate and the side plate are connected by embedding and press-fitting the first protrusion into the first groove, ensuring the connection strength.

For the enclosure frame, the end plate and the side plate are connected by embedding and press-fitting the first protrusion into the first groove implements connection between, replacing a welding connection manner. This avoids weak strength of the enclosure frame due to false welds, ensuring the connection strength between the end plate and the side plate, and allowing the entire enclosure frame to have high strength, high assembly quality, and high production efficiency.

In this application, the battery cell may include a lithium-ion secondary battery, a lithium-ion primary battery, a lithium-sulfur battery, a sodium-lithium-ion battery, a sodium-ion battery, a magnesium-ion battery, and the like. This is not limited in the embodiments of this application.

The battery cell disclosed in the embodiments of this application may be used without limitation in electric devices such as vehicles, ships, or aircrafts. The battery cell disclosed in this application may be used to constitute a power supply system of that electric device.

An embodiment of this application provides an electric device that uses a battery as a power source. The electric device may be but is not limited to a mobile phone, a tablet computer, a laptop computer, an electric toy, an electric tool, an electric bicycle, an electric motorcycle, an electric car, a ship, or a spacecraft. The electric toy may include a fixed or mobile electric toy, for example, a game console, an electric toy car, an electric toy ship, or an electric toy airplane. The spacecraft may include an airplane, a rocket, a space shuttle, a spaceship, and the like.

For ease of description, an electric device of an embodiment of this application being a vehicle is used as an example for description of the following embodiments.

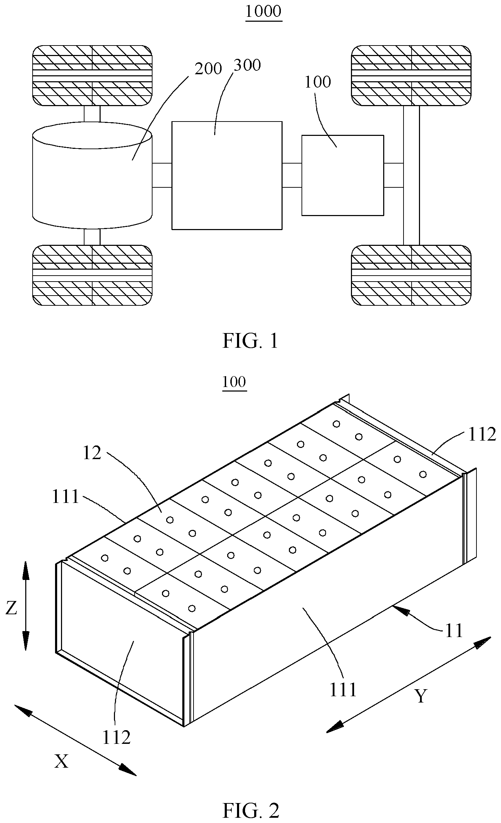

Referring to FIG. 1, FIG. 1 is a schematic structural diagram of a vehicle 1000 according to some embodiments of this application. The vehicle 1000 may be a fossil fuel vehicle, a natural-gas vehicle, or a new energy vehicle, where the new energy vehicle may be a battery electric vehicle, a hybrid electric vehicle, a range-extended vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is a schematic structural diagram of a battery 100 according to some embodiments of this application. According to some embodiments of this application, this application provides a battery 100. As shown in FIG. 2, the battery 100 includes an enclosure frame 11 and a plurality of battery cells 20, where the plurality of battery cells 20 are stacked in the enclosure frame 11.

The enclosure frame 11 includes a pair of side plates 111 and a pair of end plates 112, where the pair of side plates 111 are disposed opposite each other in a first direction X, the pair of end plates 112 are disposed opposite each other in a second direction Y perpendicular to the first direction X, the end plates 112 are disposed between the pair of side plates 111, and the pair of side plates 111 and the pair of end plates 112 are connected to form a space for accommodating the battery cell 20. The plurality of battery cells 20 are stacked in the enclosure frame 11.

The battery 100 may include one or more enclosure frames 11. When the battery 100 includes a plurality of enclosure frames 11, one enclosure frame 11 may be a battery module, the plurality of enclosure frames 11 constitute a plurality of battery modules, and the plurality of battery modules are electrically connected to form the battery 100. The form with the plurality of enclosure frames 11 can facilitate the partition management of the plurality of battery cells 20.

In some embodiments, the enclosure frame 11 is a rectangular frame. The battery 100 may further include a top cover and a bottom plate. The top cover and the bottom plate are disposed on two sides of the enclosure frame 11 in a third direction Z. The top cover and the bottom plate are both connected to the enclosure frame 11. The third direction Z is both perpendicular to the second direction Y and the first direction X.

In the figure, a direction indicated by the letter X is the first direction, a direction indicated by the letter Y is the second direction, and a direction indicated by the letter Z is the third direction. The third direction Z is perpendicular to the first direction X and the second direction Y, in other words, the third direction Z is perpendicular to a plane formed by the first direction X and the second direction Y For example, the first direction X may be a width direction of the battery 100, the second direction Y may be a length direction of the battery 100, and the third direction Z may be a height direction of the battery 100.

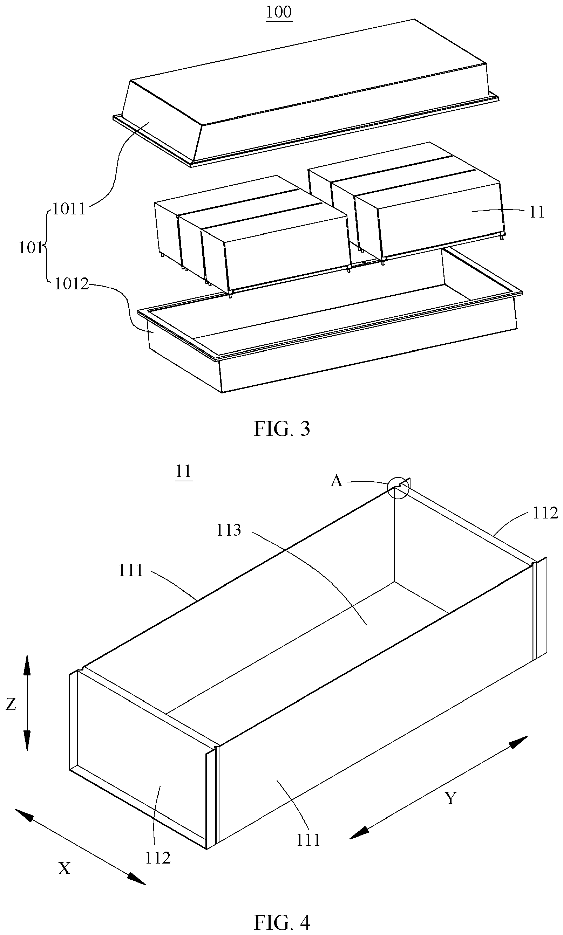

Referring to FIG. 3, FIG. 3 is a schematic structural exploded view of a battery 100 according to some embodiments of this application. Further, as shown in FIGs. 2 and 3, the battery 100 may further include a box 101. The enclosure frame 11 and the plurality of battery cells 20 are disposed in the box 101. The box 101 may have a plurality of structures. In some embodiments, the box 101 may include a first portion 1011 and a second portion 1012. The first portion 1011 and the second portion 1012 fit together so that the first portion 1011 and the second portion 1012 jointly enclose an accommodating space for accommodating the battery cell 20. The second portion 1012 may be a hollow structure with an opening at one side, and the first portion 1011 may be a plate-shaped structure, where the first portion 1011 covers the opening side of the second portion 1012 so that the first portion 1011 and the second portion 1012 jointly define an accommodating space. Alternatively, the first portion 1011 and the second portion 1012 may each be a hollow structure with an opening at one side, where the opening side of the first portion 1011 is engaged with the opening side of the second portion 1012.

In the battery 100, the plurality of battery cells 20 may be connected in series, parallel, or series-parallel, where being connected in series-parallel means a combination of series and parallel connections of the plurality of battery cells 20. The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto.

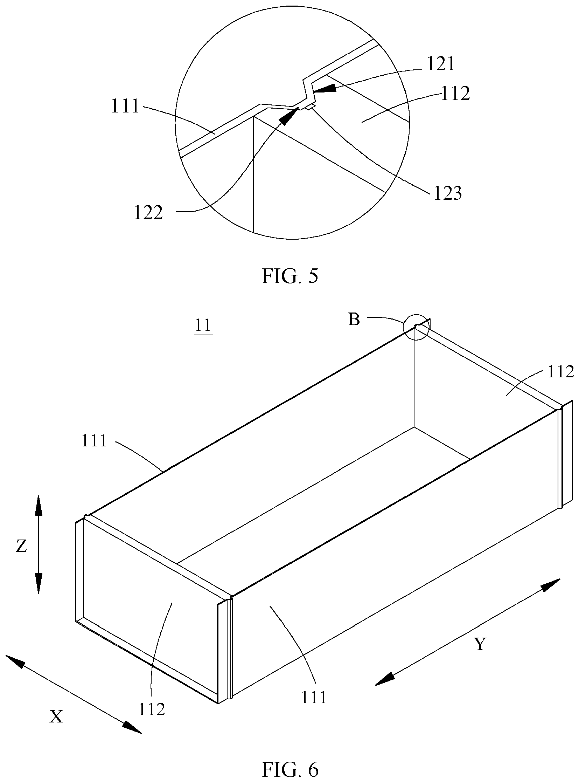

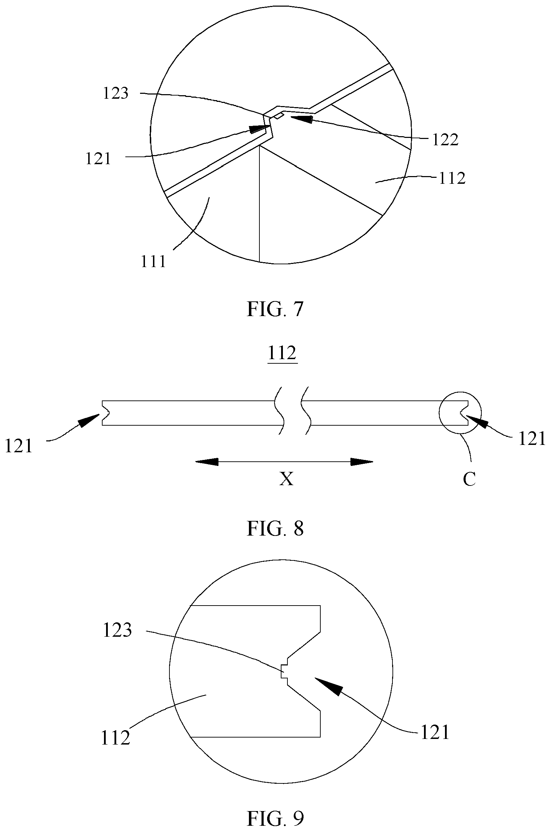

Referring to FIGs. 4 to 7, FIG. 4 is a schematic structural diagram of an enclosure frame 11 according to some embodiments of this application; FIG. 5 is a locally enlarged view of position A in FIG. 4; FIG. 6 is a schematic structural diagram of an enclosure frame 11 according to some embodiments of this application; and FIG. 7 is an enlarged view of position B in FIG. 6.

According to some embodiments of this application, this application provides an enclosure frame 11 applied to a battery 100. As shown in FIGs. 4 to 7, the enclosure frame 11 includes a pair of side plates 111 and a pair of end plates 112. The pair of side plates 111 are disposed opposite each other in a first direction X, the pair of end plates 112 are disposed opposite each other in a second direction Y perpendicular to the first direction X, and the end plates 112 are disposed between the pair of side plates 111. Two ends of the end plate 112 in the first direction X are each provided with a first groove 121, and a side of the side plate 111 facing the end plate 112 is provided with a first protrusion 122; or two ends of the end plate 112 in the first direction X are each provided with a first protrusion 122, and a side of the side plate 111 facing the end plate 112 is provided with a first groove 121. The first protrusion 122 is configured to be embedded into the first groove 121 so as to limit movement of the end plate 112 along the second direction Y relative to the side plate 111.

As shown in FIG. 2, the battery 100 includes an enclosure frame 11 and a plurality of battery cells 20, where the plurality of battery cells 20 are stacked in the enclosure frame 11. A pair of end plates 112 are respectively located at two ends of the battery cell 20 in a stacking direction. To be specific, the second direction Y is the stacking direction of the battery cell 20, and the end plate 112 is configured to limit the battery cell 20 in the stacking direction of the battery cell 20.

A pair of side plates 111 are disposed opposite each other in the first direction X. The end plates 112 are disposed between the pair of side plates 111, and the side plate 111 and the end plate 112 form a space for accommodating the battery cell 20. Two ends of the end plate 112 in the first direction X are connected to the side plate 111 respectively. Limiting movement of the end plate 112 along the second direction Y relative to the side plate 111 can limit the battery cell 20 in the second direction Y

In the embodiments of this application, the end plate 112 and the side plate 111 are each a metal part and have good strength. In addition, the side plate 111 has certain flexibility, so that the side plate 111 can deform, and the side plate 111 still has good strength after deforming. The end plate 112 corresponds to a large surface of the battery cell 20. The end plate 112 has a large area corresponding to the battery cell 20. The end plate 112 is used for limiting the battery cell 20 in the second direction Y and protecting the battery cell 20. Therefore, the end plate 112 has a large thickness, and the thickness of the end plate 112 is typically larger than that of the side plate 111.

As shown in FIGs. 4 and 5, in the solution in which two ends of the end plate 112 in the first direction X are each provided with a first groove 121, and a side of the side plate 111 facing the end plate 112 is provided with a first protrusion 122, the two ends of the end plate 112 in the first direction X are the same in structure, facilitating processing. Since the thickness of the side plate 111 is smaller than that of the end plate 112, the side plate 111 is more likely to deform than the end plate 112. When the side plate 111 fits with the end plate 112, the side plate 111 is extruded toward the end plate 112 and embedded into the first groove 121 of the end plate 112. After the side plate 111 fits with the end plate 112, a portion of the side plate 111 embedded into the first groove 121 forms the first protrusion 122.

As shown in FIGs. 6 and 7, in the solution in which two ends of the end plate 112 in the first direction X are each provided with a first protrusion 122, and a side of the side plate 111 facing the end plate 112 is provided with a first groove 121, the two ends of the end plate 112 in the first direction X are the same in structure, facilitating processing. Since the thickness of the side plate 111 is smaller than that of the end plate 112, the side plate 111 is more likely to deform than the end plate 112. When the side plate 111 fits with the end plate 112, the side plate 111 is extruded toward the end plate 112 and wraps the first protrusion 122 of the end plate 112. After the side plate 111 fits with the end plate 112, a portion of the side plate 111 wrapping the first protrusion 122 forms the first groove 121.

In the enclosure frame 11 according to the embodiments of this application, that is applied to the battery 100 for accommodating the battery cells 20, the end plate 112 and the side plate 111 are connected by embedding and press-fitting the first protrusion 122 into the first groove 121, replacing a welding connection manner. This avoids weak strength of the enclosure frame 11 due to false welds, ensuring the connection strength between the end plate 112 and the side plate 111, and allowing the entire enclosure frame 11 to have high strength, high assembly quality, and high production efficiency.

According to some embodiments of this application, optionally, as shown in FIGs. 4 to 7, the first protrusion 122 and the first groove 121 both extend along the third direction Z, and the third direction Z is perpendicular to the first direction X and the second direction Y

The first protrusion 122 and the first groove 121 both extend along the third direction Z, and the third direction Z may be a length direction of the first protrusion 122, that is, the third direction Z may be a length direction of the first groove 121, so that the first protrusion 122 and the first groove 121 each have a long dimension in the third direction Z, and the end plate 112 and the side plate 111 have a long connection zone in the third direction Z, in other words, the end plate 112 and the side plate 111 have high connection stability in the third direction Z.

Optionally, in the solution in which two ends of the end plate 112 in the first direction X are each provided with a first groove 121, and a side of the side plate 111 facing the end plate 112 is provided with a first protrusion 122, the first groove 121 can run through the end plate 112 along the third direction Z, that is, the first groove 121 can extend from one end of the end plate 112 in the third direction Z to the other end of the end plate 112 in the third direction Z, so that the connection stability between the end plate 112 and the side plate 111 is high. In addition, this facilitates processing and molding and reduces the manufacturing costs.

Optionally, in the solution in which two ends of the end plate 112 in the first direction X are each provided with a first protrusion 122, and a side of the side plate 111 facing the end plate 112 is provided with a first groove 121, the first protrusion 122 can run through the end plate 112 along the third direction Z, that is, the first protrusion 122 can extend from one end of the end plate 112 in the third direction Z to the other end of the end plate 112 in the third direction Z, so that the connection stability between the end plate 112 and the side plate 111 is high. In addition, this facilitates processing and molding and reduces the manufacturing costs.

The first protrusion 122 and the first groove 121 extending along the third direction Z ensures the connection stability between the end plate 112 and the side plate 111, which is conducive to limiting movement of the end plate 112 along the second direction Y relative to the side plate 111.

According to some embodiments of this application, optionally, along a direction from the bottom of the first groove 121 to an opening of the first groove 121, width of the first groove 121 gradually increases.

For example, FIG. 8 is a vertical view of an end plate 112 according to some embodiments of this application. FIG. 9 is a locally enlarged view of position C in FIG. 8. As shown in FIGs. 8 and 9, in an example in which two ends of the end plate 112 in the first direction X are each provided with a first groove 121, the first direction X is a depth direction of the first groove 121, and the first groove 121 is formed along the first direction X, that is, the opening of the first groove 121 and the bottom of the first groove 121 are distributed along the first direction X.

Along the direction from the bottom of the first groove 121 to the opening of the first groove 121, the width of the first groove 121 gradually increases. In other words, the opening of the first groove 121 is large, so that the width of the first groove 121 gradually decreases as depth of the first groove 121 increases, facilitating processing and molding. In addition, the arrangement manner of the first groove 121 helps the first protrusion 122 to be embedded into the first groove 121 and facilitates press-fitting between the side plate 111 and the end plate 112, ensuring good contact between the side plate 111 and the end plate 112, and ensuring the connection stability between the end plate 112 and the side plate 111.

According to some embodiments of this application, optionally, a sealing adhesive is filled between the first protrusion 122 and the first groove 121.

The sealing adhesive being filled between the first protrusion 122 and the first groove 121 may mean that the inside of the first protrusion 122 or the first groove 121 is coated with the sealing adhesive before the end plate 112 fits with the side plate 111, then the first protrusion 122 is embedded into the first groove 121, implementing connection between the end plate 112 and the side plate 111, and ensuring that the sealing adhesive between the first protrusion 122 and the first groove 121 is evenly distributed.

After the first protrusion 122 is embedded and press-fitted into the first groove 121, the first protrusion 122 fits with the surface of the first groove 121, and the sealing adhesive is filled between the first protrusion 122 and the first groove 121, so that the end plate 112 and the side plate 111 are hermetically connected to each other, preventing liquid or other impurities from entering the enclosure frame 11, and ensuring the sealing effect of the enclosure frame 11.

According to some embodiments of this application, optionally, the bottom of the first groove 121 is provided with an adhesive overflowing groove 123.

The adhesive overflowing groove 123 is a zone for accommodating the sealing adhesive. Before the end plate 112 and the side plate 111 are assembled, the inside of the adhesive overflowing groove 123 is coated with the sealing adhesive. When the first protrusion 122 is embedded into the first groove 121, a convex portion of the first protrusion 122 is embedded into the adhesive overflowing groove 123 and extrudes the sealing adhesive in the adhesive overflowing groove 123 to fill the first groove 121, implementing tight sealing.

As shown in FIGs. 4, 5, and 9, the two ends of the end plate 112 in the first direction X are each provided with the first groove 121, and the adhesive overflowing groove 123 is located at the bottom of the first groove 121.

The adhesive overflowing groove 123 is located at the bottom of the first groove 121, which helps to guide the sealing adhesive to flow when the first protrusion 122 is embedded into the first groove 121, allowing the first groove 121 to be filled with the sealing adhesive, and ensuring sealing fit between the first protrusion 122 and the first groove 121.

According to some embodiments of this application, optionally, a cross section of the adhesive overflowing groove 123 is rectangular.

The adhesive overflowing groove 123 is provided at the bottom of the first groove 121, and an extension direction of the adhesive overflowing groove 123 is consistent with an extension direction of the first groove 121. The adhesive overflowing groove 123 is formed along a direction perpendicular to the bottom of the first groove 121. For example, the adhesive overflowing groove 123 may be formed along the first direction X.

The cross section of the adhesive overflowing groove 123 refers to a cross section of a plane perpendicular to the extension direction of the adhesive overflowing groove 123.

The rectangular adhesive overflowing groove 123 facilitates processing and is conducive to addressing a punching position of the end plate 112 in advance when the side plate 111 and the end plate 112 are automatically punched, helping to implement punching positioning of the side plate 111 and the end plate 112.

In another embodiment, the cross section of the adhesive overflowing groove 123 may further be of another shape, for example, a triangle, a polygon, or an irregular shape.

According to some embodiments of this application, optionally, the convex portion of the first protrusion 122 corresponding to the bottom of the first groove 121 is provided with the adhesive overflowing groove 123.

As shown in FIGs. 6 and 7, the two ends of the end plate 112 in the first direction X are each provided with the first protrusion 122, and the adhesive overflowing groove 123 is located at a position of the first protrusion 122 corresponding to the bottom of the first groove 121.

According to some embodiments of this application, optionally, along the second direction Y, two ends of the side plate 111 extend beyond the pair of end plates 112 respectively.

The two ends of the side plate 111 extending beyond the pair of end plates 112 respectively means that along the second direction Y, a certain distance is present between an outer surface of the end plate 112 and an end of the side plate 111 adjacent thereto. The outer surface of the end plate 112 refers to a surface of the end plate 112 away from the other end plate 112.

The ends of the side plate 111 extend beyond the end plate 112 to reserve a bending length of the side plate 111, ensuring that there is a large connection area between the side plate 111 and the end plate 112 when the side plate 111 and the end plate 112 are press-fitted together, thereby ensuring the connection stability between the side plate 111 and the end plate 112.

According to some embodiments of this application, optionally, along the second direction Y, the length by which the side plate 111 extends beyond the end plate 112 is 10 mm to 20 mm.

The length by which the side plate 111 extends beyond the end plate 112 refers to a distance between the end of the side plate 111 and the end plate 112 adjacent thereto along the second direction Y

The length by which the side plate 111 extends beyond the end plate 112 is 10 mm to 20 mm, ensuring the connection stability between the side plate 111 and the end plate 112, and ensuring a large space formed by the enclosure frame 11. An excessively large length by which the side plate 111 extends beyond the end plate leads to waste of a mounting space.

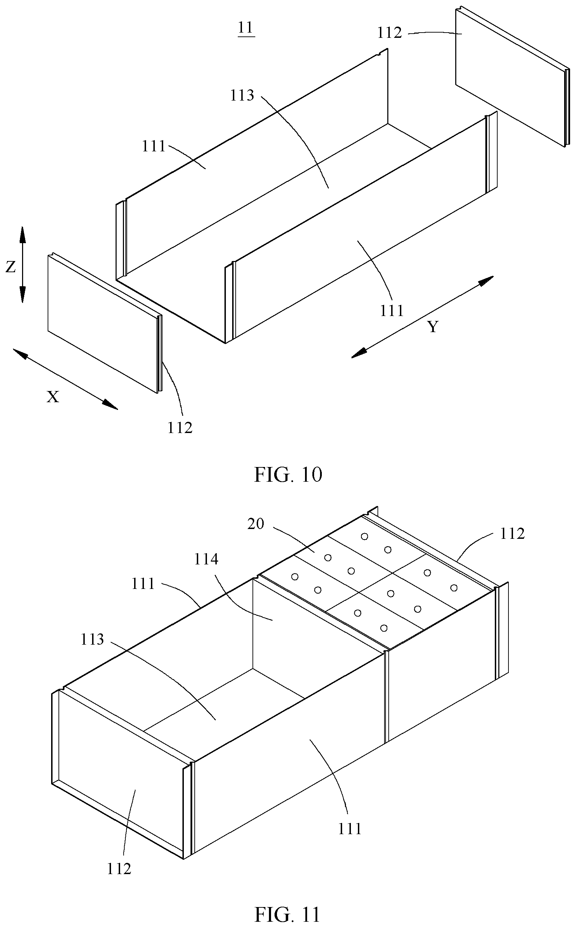

Referring to FIG. 10, FIG. 10 is a schematic structural exploded view of an enclosure frame 11 according to some embodiments of this application. According to some embodiments of this application, optionally, as shown in FIG. 10, the enclosure frame 11 further includes a bottom plate 113, where a pair of side plates 111 extend from two edges of the bottom plate 113 in the first direction X along a direction perpendicular to the bottom plate 113. As shown in FIGs. 4 and 6, a pair of end plates 112 are located in a space formed by the bottom plate 113 and the pair of side plates 111.

The pair of side plates 111 extending from the two edges of the bottom plate 113 in the first direction X along the direction perpendicular to the bottom plate 113 can be understood as that the pair of side plates 111 and the bottom plate 113 form a U-shaped structure.

The pair of end plates 112 are located in the space formed by the bottom plate 113 and the pair of side plates 111, and in the third direction Z, the end plate 112 is located on the bottom plate 113.

The bottom plate 113, the end plate 112, and the side plate 111 form a space for accommodating a battery cell 20. The bottom plate 113 can support the battery cell 20 so as to accommodate the battery cell 20.

According to some embodiments of this application, optionally, the bottom plate 113 and the pair of side plates 111 are integrally formed.

The bottom plate 113 and the pair of side plates 111 may be integrally formed by bending, ensuring the connection strength between the bottom plate 113 and the side plate 111.

The bottom plate 113 and the pair of side plates 111 being integrally formed facilitates processing and reduces the manufacturing costs.

Referring to FIG. 11, FIG. 11 is a schematic structural diagram of an enclosure frame 11 according to some other embodiments of this application. According to some embodiments of this application, the enclosure frame 11 further includes a partition plate 114, where the partition plate 114 is disposed between a pair of end plates 112, and two ends of the partition plate 114 in the first direction X are connected to a pair of side plates 111 respectively.

The partition plate 114 is a component for partitioning a space in the enclosure frame 11 to partition the space in the enclosure frame 11. One or more partition plates 114 may be provided, and a quantity of the partition plate 114 is set based on design requirements.

When the enclosure frame 11 is provided with the partition plate 114, the partition plate 114 is connected to the side plate 111, facilitating partition of the space formed by the enclosure frame 11 and management of the battery cell 20 disposed in the enclosure frame 11.

According to some embodiments of this application, the two ends of the partition plate 114 in the first direction X are each provided with a second groove, and a side of the side plate 111 facing the partition plate 114 is provided with a second protrusion; or the two ends of the partition plate 114 in the first direction X are each provided with a second protrusion, and a side of the side plate 111 facing the partition plate 114 is provided with a second groove. The second protrusion is configured to be embedded into the second groove so as to limit movement of the partition plate 114 along the second direction Y relative to the side plate 111.

The partition plate 114 and the end plate 112 are the same in structure. The thickness of the partition plate 114 may be the same as that of the end plate 112, or the thickness of the partition plate 114 may be smaller than that of the end plate 112 and larger than that of the side plate 111. In these embodiments of this application, the second groove and the first groove 121 are the same in structure, and the second protrusion and the first protrusion 122 are the same in structure. For details, refer to the first groove 121 and the first protrusion 122.

In the solution in which the two ends of the partition plate 114 in the first direction X are each provided with a second groove, and a side of the side plate 111 facing the partition plate 114 is provided with a second protrusion, the two ends of the partition plate 114 in the first direction X are the same in structure, facilitating processing. Since the thickness of the side plate 111 is smaller than that of the partition plate 114, the side plate 111 is more likely to deform than the partition plate 114. When the side plate 111 fits with the partition plate 114, the side plate 111 is extruded toward the partition plate 114 and embedded into the second groove of the partition plate 114. After the side plate 111 fits with the partition plate 114, a portion of the side plate 111 embedded into the second groove forms the second protrusion.

In the solution in which the two ends of the partition plate 114 in the first direction X are each provided with a second protrusion, and a side of the side plate 111 facing the partition plate 114 is provided with a second groove, the two ends of the partition plate 114 in the first direction X are the same in structure, facilitating processing. Since the thickness of the side plate 111 is smaller than that of the partition plate 114, the side plate 111 is more likely to deform than the partition plate 114. When the side plate 111 fits with the partition plate 114, the side plate 111 is extruded toward the partition plate 114 and wraps the second protrusion of the partition plate 114. After the side plate 111 fits with the partition plate 114, a portion of the side plate 111 wrapping the second protrusion forms the second groove.

The partition plate 114 and the side plate 111 are connected by embedding and press-fitting the second protrusion into the second groove, ensuring the connection strength between the partition plate 114 and the side plate 111. When the partition plate 114 needs to be provided, the partition plate 114 needs to be assembled with the pair of side plates 111 first, and then the end plate 112 is assembled with the pair of side plates 111.

According to some embodiments of this application, this application provides an electric device including the battery cell 20 described in any one of the foregoing solutions.

The electric device may be any one of the foregoing devices or systems using the battery 100.

According to some embodiments of this application, referring to FIGs 4 to 11, this application provides an enclosure frame 11 applied to a battery 100. The enclosure frame 11 includes a pair of side plates 111 and a pair of end plates 112, where the pair of side plates 111 are disposed opposite each other in a first direction X, the pair of end plates 112 are disposed opposite each other in a second direction Y perpendicular to the first direction X, and the end plates 112 are disposed between the pair of side plates 111. Two ends of the end plate 112 in the first direction X are each provided with a first groove 121, and an adhesive overflowing groove 123 is provided at the bottom of the first groove 121. A side of the side plate 111 facing the end plate 112 is provided with a first protrusion 122, the first protrusion 122 is configured to be embedded into the first groove 121, and a sealing adhesive is filled between the end plate 112 and the side plate 111.

For the enclosure frame 11 according to the embodiments of this application, the end plate 112 and the side plate 111 are connected by embedding and press-fitting the first protrusion 122 into the first groove 121, replacing a welding connection manner. This avoids weak strength of the enclosure frame 11 due to false welds. In addition, the sealing adhesive is filled between the first protrusion 122 and the first groove 121, ensuring sealing fit between the end plate 112 and the side plate 111, ensuring the connection strength between the end plate 112 and the side plate 111, and allowing the entire enclosure frame 11 to have high strength, high assembly quality, and high production efficiency.

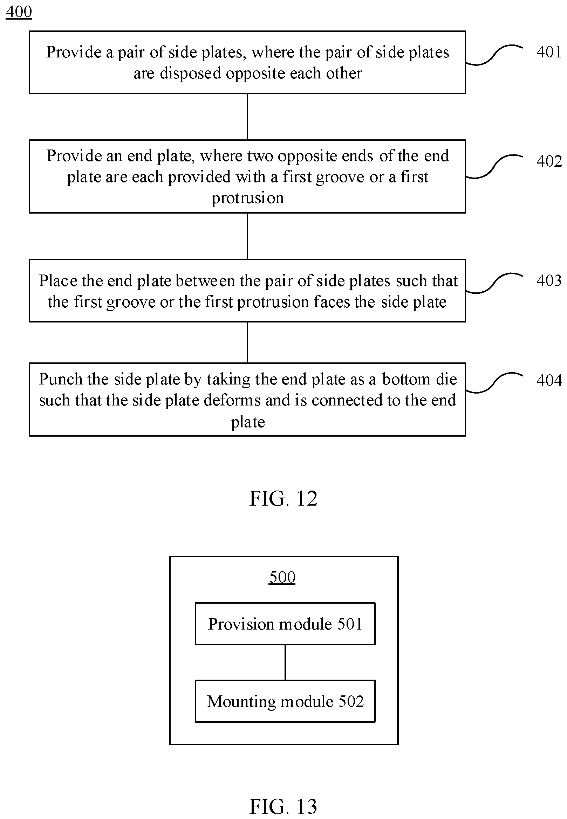

FIG. 12 is a schematic flowchart of a method 400 for manufacturing an enclosure frame according to some embodiments of this application. According to some embodiments of this application, as shown in FIG. 12, this application provides a method 400 for manufacturing an enclosure frame. The method 400 for manufacturing an enclosure frame includes the following steps.

401. Provide a pair of side plates 111, where the pair of side plates 111 are disposed opposite each other.

402. Provide an end plate 112, where two opposite ends of the end plate 112 are each provided with a first groove 121 or a first protrusion 122.

403. Place the end plate 112 between the pair of side plates 111 such that the first groove 121 or the first protrusion 122 faces the side plate 111.

404. Punch the side plate 111 by taking the end plate 112 as a bottom die such that the side plate 111 deforms and is connected to the end plate 112.

In step "402. Provide an end plate 112, where two opposite ends of the end plate 112 are each provided with a first groove 121 or a first protrusion 122", when the two opposite ends of the end plate 112 are each provided with the first groove 121, a shape of a punching head is a shape of the first protrusion 122, and after the side plate 111 is pressed into the first groove 121 by the punching head, a portion of the side plate 111 embedded into the first groove 121 forms the first protrusion 122; or when the two opposite ends of the end plate 112 are each provided with the first protrusion 122, a shape of a punching head is a shape of the first groove 121, the side plate 111 is pressed toward the end plate 112 by the punching head, the side plate 111 wraps the first protrusion 122, and a portion of the side plate 111 wrapping the first protrusion 122 forms the first groove 121.

In step "404. Punch the side plate 111 by taking the end plate 112 as a bottom die such that the side plate 111 deforms and is connected to the end plate 112", the end plate 112 is positioned by a positioning mechanism, and the pair of side plates 111 are punched synchronously to ensure the punching and molding quality.

It should be noted that a structure of an enclosure frame 11 manufactured using the method 400 for manufacturing an enclosure frame according to the embodiments of this application is not described herein. For details, refer to the foregoing embodiments of the enclosure frame 11.

In the method 400 for manufacturing an enclosure frame according to the embodiments of this application, the bottom die does not need to be additionally provided. The end plate 112 is used as the bottom die, and the side plate 111 is punched so that the side plate 111 is bent to deform and pressed together with the end plate 112, that is, the first protrusion 122 is embedded into the first groove 121 so as to limit the movement of the end plate 112 along the second direction Y relative to the side plate 111. This ensures the connection strength between the end plate 112 and the side plate 111 and allows the enclosure frame 11 manufactured to have high strength, long service life, and high assembly quality. The method for manufacturing the enclosure frame 11 is simple to operate and conducive to improving production efficiency.

According to some embodiments of this application, optionally, before placing the end plate 112 between the pair of side plates 111, the method for manufacturing the enclosure frame 11 further includes: applying a sealing adhesive to the first groove 121 or the first protrusion 122.

Applying the sealing adhesive to the first groove 121 or the first protrusion 122 allows a joint of the end plate 112 and the side plate 111 to be sealed after the first protrusion 122 fits with the first groove 121, ensuring the sealing effect of the enclosure frame 11.

FIG. 13 is a schematic block diagram of an apparatus 500 for manufacturing an enclosure frame according to some embodiments of this application. According to some embodiments of this application, this application provides an apparatus 500 for manufacturing an enclosure frame. The apparatus includes:
a provision module 501, configured to provide a pair of side plates 111 and an end plate 112, where the pair of side plates 111 are disposed opposite each other, and two opposite ends of the end plate 112 are each provided with a first groove 121 or a first protrusion 122; and
a mounting module 502, configured to: place the end plate 112 between the pair of side plates 111 such that the first groove 121 or the first protrusion 122 faces the side plate 111, and punch the side plate 111 by taking the end plate 112 as a bottom die such that the side plate 111 deforms and is connected to the end plate 112.

It should be noted that a structure of an enclosure frame 11 manufactured using the apparatus 500 for manufacturing an enclosure frame according to the embodiments of this application is not described herein. For details, refer to the foregoing embodiments of the enclosure frame 11.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. An enclosure frame applied to a battery, wherein the enclosure frame comprises:
a pair of side plates, wherein the pair of side plates are disposed opposite each other in a first direction; and
a pair of end plates, wherein the pair of end plates are disposed opposite each other in a second direction perpendicular to the first direction, and the end plates are disposed between the pair of side plates;
wherein two ends of the end plate in the first direction are each provided with a first groove, and a side of the side plate facing the end plate is provided with a first protrusion; or two ends of the end plate in the first direction are each provided with a first protrusion, and a side of the side plate facing the end plate is provided with a first groove; and
the first protrusion is configured to be embedded into the first groove so as to limit movement of the end plate along the second direction relative to the side plate.

2. The enclosure frame according to claim 1, wherein the first protrusion and the first groove both extend along a third direction, and the third direction is perpendicular to the first direction and the second direction.

3. The enclosure frame according to claim 1 or 2, wherein along a direction from the bottom of the first groove to an opening of the first groove, width of the first groove gradually increases.

4. The enclosure frame according to any one of claims 1 to 3, wherein a sealing adhesive is filled between the first protrusion and the first groove.

5. The enclosure frame according to claim 4, wherein the bottom of the first groove is provided with an adhesive overflowing groove.

6. The enclosure frame according to claim 5, wherein a cross section of the adhesive overflowing groove is rectangular.

7. The enclosure frame according to any one of claims 1 to 6, wherein along the second direction, two ends of the side plate extend beyond the pair of end plates respectively.

8. The enclosure frame according to claim 7, wherein along the second direction, the side plate extends beyond the end plate by a length of 10 mm to 20 mm.

9. The enclosure frame according to any one of claims 1 to 8, wherein the enclosure frame further comprises:
a bottom plate, wherein the pair of side plates extend from two edges of the bottom plate in the first direction along a direction perpendicular to the bottom plate, and the pair of end plates are located in a space formed by the bottom plate and the pair of side plates.

10. The enclosure frame according to claim 9, wherein the bottom plate and the pair of side plates are integrally formed.

11. The enclosure frame according to any one of claims 1 to 8, wherein the enclosure frame further comprises:
a partition plate, wherein the partition plate is disposed between the pair of end plates, and two ends of the partition plate in the first direction are connected to the pair of side plates respectively.

12. The enclosure frame according to claim 11, wherein the two ends of the partition plate in the first direction are each provided with a second groove, and a side of the side plate facing the partition plate is provided with a second protrusion; or the two ends of the partition plate in the first direction are each provided with a second protrusion, and a side of the side plate facing the partition plate is provided with a second groove; and
the second protrusion is configured to be embedded into the second groove so as to limit movement of the partition plate along the second direction relative to the side plate.

13. A battery, comprising:
the enclosure frame according to any one of claims 1 to 12; and
a plurality of battery cells, wherein the plurality of battery cells are stacked in the enclosure frame.

14. An electric device, comprising the battery according to claim 13.

15. A method for manufacturing an enclosure frame, comprising:
providing a pair of side plates, wherein the pair of side plates are disposed opposite each other;
providing an end plate, wherein two opposite ends of the end plate are each provided with a first groove or a first protrusion;
placing the end plate between the pair of side plates such that the first groove or the first protrusion faces the side plate; and
punching the side plate by taking the end plate as a bottom die such that the side plate deforms and is connected to the end plate.

16. The method for manufacturing an enclosure frame according to claim 15, wherein before placing the end plate between the pair of side plates, the method for manufacturing an enclosure frame further comprises:
applying a sealing adhesive to the first groove or the first protrusion.

17. An apparatus for manufacturing an enclosure frame, comprising:
a provision module, configured to provide a pair of side plates and an end plate, wherein the pair of side plates are disposed opposite each other, and two opposite ends of the end plate are each provided with a first groove or a first protrusion; and
a mounting module, configured to: place the end plate between the pair of side plates such that the first groove or the first protrusion faces the side plate, and punch the side plate by taking the end plate as a bottom die such that the side plate deforms and is connected to the end plate.
